# EUROPÄISCHE PATENTANMELDUNG

(11) **EP 2 068 014 A1**
(43) Veröffentlichungstag der Anmeldung: **10.06.2009**
(21) Anmeldenummer: 07023776.3
(22) Anmeldetag: 07.12.2007
(51) Int. Cl.: F16B 39/34

(54) **Schraubensicherung**

(71) Anmelder: SIEMENS AKTIENGESELLSCHAFT, 80333 München (DE)
(72) Erfinder: Grunert, Georg, 45219 Essen (DE); Hoenig, Christian, 44869 Bochum (DE); Loch, Walter, 45472 Mülheim an der Ruhr (DE); Pasqualino, Salvatore, 40597 Düsseldorf (DE); Simmchen, Joachim, 51429 Bergisch Gladbach (DE)

(57) **Zusammenfassung**

Eine Vorrichtung (1) zur Sicherung einer Schraubenverbindung (20) wird angegeben. Hierbei ist vorgesehen, dass die Vorrichtung (1) eine Schraubenmutter (2) und ein Sperrelement (3) umfasst. Die Schraubenmutter (2) ist mit einem durchgängigen Kanal (4) versehen. Ein erstes Ende (8) des Kanals (4) mündet an einer Unterseite (6) der Schraubenmutter (2), die in einer Montagestellung einer Oberfläche (23) eines zu verschraubenden Teils (22) zugewandt ist, wohingegen ein zweites Ende (9) des Kanals (4) an einem inneren Gewindegang (5) der Schraubenmutter (2) mündet. Das Sperrelement (3) weist einen harten Abschnitt (10) und einen weichen Abschnitt (11) auf. In einem Vormontagezustand liegt das Sperrelement (3) derart in dem Kanal (4) der Schraubenmutter (2) ein, dass es mit einem Freiende (12) des harten Abschnitts (10) an der Unterseite (6) der Schraubenmutter (2) aus dem Kanal (4) herausragt, während der weiche Abschnitt (11) vollständig in dem Kanal (4) aufgenommen ist. Weiterhin ist das Sperrelement (3) in dem Kanal (4) derart verschiebbar, dass ein Freiende (13) des weichen Abschnitts (11) in den Gewindegang (5) hineinragt, wenn das Freiende (12) des harten Abschnitts (10) mit der Unterseite (6) bündig ist.

## Beschreibung

Die Erfindung bezieht sich auf eine Vorrichtung zur Sicherung einer Schraubenverbindung.

Eine Schraubenverbindung umfasst normalerweise eine Schraube, einen Innengewindeträger wie beispielsweise eine Schraubenmutter sowie ein zu befestigendes Bauteil. Wird eine solche Schraubenverbindung - insbesondere durch Schwingungen - dynamisch beansprucht, so kann dies dazu führen, dass sich die Verbindung durch Drehen der Schraube oder des Innengewindeträgers selbsttätig lockert. Infolgedessen wird das Bauteil mit einer reduzierten Klemmkraft verspannt, wodurch es zu einem Versagen der Schraubenverbindung kommen kann.

Um einem unbeabsichtigten Lösen der Schraubenverbindung entgegenzuwirken, werden herkömmlicherweise z.B. Sperrzahnschrauben eingesetzt. Eine solche Sperrzahnschraube weist unter ihrem Schraubenkopf ein radial verlaufendes Profil auf, das aus - etwa tortenstückähnlichen - leicht gekrümmten, schiefen Ebenen gebildet wird. Jede schiefe Ebene weist in Anziehrichtung der Schraube eine geringe Steigung auf, wohingegen sie in Losdrehrichtung eine hohe Steigung aufweist. Hierdurch kann die Schraube mit geringem Kraftaufwand eingeschraubt werden, wobei sich das Profil in die Oberfläche eines zu verschraubenden Bauteils einprägt. Die Steilkanten des Profils bewirken dann einen hohen Widerstand gegen das Losdrehen der Schraube und sichern so die Schraube bzw. die Schraubenverbindung.

Eine weitere herkömmliche Schraubensicherung sieht vor, die Schraubenmutter mit einem Paar unter der Schraubenmutter mitverspannten Keilscheiben, sogenannten "Nord-Lock-Scheiben" zu sichern. Die Keilscheiben haben an den voneinander abgewandten Außenflächen Radialrippen, die sich beim Festziehen der Schraubenmutter einerseits in die Oberfläche der Schraubenmutter und andererseits in die Oberfläche des zu verschraubenden Bauteils einprägen. Dadurch kommt es zu einem Formschluss zwischen Schraubenmutter und Keilscheibe bzw. zwischen Bauteil und Keilscheibe. An den aufeinanderliegenden Innenflächen sind die Keilscheiben mit ineinandergreifenden schiefen Ebenen - "Keilen" versehen. Eine Drehung der Schraubenmutter bewirkt nun, dass sich die beiden Keilscheiben entlang den schiefen Ebenen gegeneinander verschieben. Da der Winkel der schiefen Ebenen hierbei größer ist, als die Gewindesteigung der Schraubenmutter, wird durch das Verschieben der Keilscheiben die Klemmkraft der Schraubenverbindung erhöht und somit die Schraubenverbindung gesichert.

Der Erfindung liegt die Aufgabe zugrunde, eine besonders geeignete Vorrichtung zur Sicherung einer Schraubenverbindung anzugeben.

Diese Aufgabe wird erfindungsgemäß gelöst durch die Merkmale des Anspruchs 1. Hierbei ist vorgesehen, eine Schraubenverbindung mithilfe einer Schraubenmutter und eines Sperrelements zu sichern. Dabei ist die Schraubenmutter mit einem durchgängigen Kanal versehen, der mit einem ersten Ende an einer Unterseite der Schraubenmutter mündet. Diese Unterseite der Schraubenmutter ist in einer Montagestellung einer Oberfläche eines zu verschraubenden Bauteils zugewandt. Mit einem zweiten Ende mündet der Kanal an einem inneren Gewindegang der Schraubenmutter. Das Sperrelement umfasst einen harten Abschnitt und einen vergleichsweise weichen Abschnitt.

In einem Vormontagezustand sitzt das Sperrelement derart in dem Kanal, dass es mit einem Freiende des harten Abschnitts an der Unterseite der Schraubenmutter aus dem Kanal herausragt, wohingegen der weiche Abschnitt vollkommen in dem Kanal aufgenommen ist. Das Sperrelement ist dabei in koaxialer Richtung derart in dem Kanal verschiebbar, dass ein Freiende des weichen Abschnitts in den Gewindegang hineinragt, wenn das Freiende des harten Abschnitts mit der Unterseite der Schraubenmutter bündig ist. Das Sperrelement insgesamt ist somit im Rohzustand insbesondere länger als der Kanal.

Wird eine Schraubenverbindung mit der erfindungsgemäßen Vorrichtung gesichert, so wird beim Anziehen der Schraubenmutter der an der Unterseite herausragende harte Abschnitt des Sperrelements durch die Oberfläche des zu verschraubenden Bauteils zunächst in den Kanal der Schraubenmutter hineingeschoben. Der harte Abschnitt schiebt hierbei den weichen Abschnitt vor sich her, so dass der weiche Abschnitt des Sperrelements an dem zweiten Ende des Kanals aus dem Kanal herausgeschoben wird. Das Freiende des weichen Abschnitts wird dabei in den Gewindegang und somit gegen ein Außengewinde einer in diesen eingeschraubten Schraube gedrückt. Beim Anziehen der Schraubenmutter wird schließlich das Freiende des weichen Abschnitts in das Gewindespiel zwischen Schraubenmutter und Schraube gequetscht und arretiert somit die Schraubenmutter gegenüber der Schraube.

Andererseits drückt bei angezogener Schraubenmutter das Freiende des harten Abschnitts auf die Oberfläche des zu verschraubenden Bauteils, wodurch es die Schraubenmutter gegenüber dem Bauteil drehfixiert.

Der "harte" Abschnitt des Sperrelements ist zweckmäßigerweise etwa ebenso hart oder sogar noch härter wie die Schraubenmutter und das zu verschraubenden Bauteil. Der "weiche" Abschnitt des Sperrelements ist dagegen aus einem Material gebildet, das sowohl gegenüber dem harten Abschnitt, als auch gegenüber dem zu verschraubenden Bauteil und der Schraube weich ist. Insbesondere ist das Sperrelement an seinem harten Abschnitt so hart, dass es sich bei angezogener Schraubenmutter in die Oberfläche des zu verschraubenden Bauteils einprägt. An seinem weichen Abschnitt ist das Sperrelement insbesondere weich genug, dass es beim Anziehen der Schraubenmutter in das Gewinde der Schraube gequetscht wird.

Vorteilhafterweise ist das Sperrelement stiftförmig, wobei seine Querschnittsform an die Querschnittsform des Kanals angepasst ist, so dass das Sperrelement passgenau in dem Kanal einliegt. Das Sperrelement ist dabei insbesondere durch einen überwindbaren Reibschluss in dem Kanal gehalten, so dass ein selbsttätiges Herausfallen des Sperrelements aus der Schraubenmutter unter Lager- und Transportbedingungen verhindert ist. Zur Sicherheit kann der Stift auch zusätzlich im Vormontagezustand eingeklebt werden, wobei diese Klebeverbindung derart ausgebildet ist, dass sie beim Anziehen der Mutter aufgebrochen wird.

In einer besonders vorteilhaften Ausführungsform ist der Kanalquerschnitt rund ausgebildet. In dieser Ausführungsform kann der Kanal zweckmäßigerweise durch eine einfache Bohrung in die Schraubenmutter eingebracht werden.

In einer weiteren vorteilhaften Ausführungsform ist die Schraubenmutter mit drei gleichartigen Kanälen versehen, die gleichmäßig über den Umfang der Schraubenmutter verteilt sind, wobei jeder Kanal mit einem Sperrelement versehen ist. Bei dieser Anordnung wird die Schraubenverbindung zum Einen durch drei Sperrelemente bereits relativ gut gesichert. Zum Anderen wird aber die Stabilität der Schraubenmutter durch das Einbringen von drei Kanälen noch verhältnismäßig wenig beeinträchtigt. Somit stellt diese Anordnung einen guten Kompromiss aus Funktionalität bei gleichzeitig guter Stabilität dar. Zweckmäßigerweise hat der Kanal im Vergleich zum Durchmesser des Gewindeganges einen kleinen Querschnitt.

In vorteilhafter Dimensionierung mündet der Kanal an der Unterseite der Schraubenmutter etwa mittig zwischen dem Rand der Gewindedurchführung und dem (mittleren) Außenumfang. Zusätzlich oder alternativ hierzu mündet der Kanal auch im Gewindegang etwa auf mittlerer axialer Höhe zwischen der Unterseite und einer dieser gegenüberliegenden Oberseite der Schraubenmutter. Wiederum zusätzlich oder alternativ hat sich eine Neigung des Kanals von etwa 20° gegenüber einer Achse des Gewindegangs als vorteilhaft erwiesen.

Vorzugsweise besteht der harte Abschnitt des Sperrelements aus Edelstahl. Der weiche Abschnitt besteht bevorzugt aus Kupfer oder Kunststoff. Durch diese Materialien wird die Funktion des Sperrelements, wie oben beschrieben, sicher gewährleistet. Die Begriffe "hart" und "weich" sind in der Regel in der vorliegenden Anmeldung derart zu verstehen, als dass sie sich auf den jeweils anderen Abschnitt beziehen, sofern sich nicht etwas anderes aus dem Kontext ergibt. Der Abschnitt 10 des Sperrstifts 3 ist also härter als der Abschnitt 11, oder umgekehrt: der Abschnitt 11 des Sperrstifts 3 ist also weicher als der Abschnitt 10.

In einer vorteilhaften Ausführungsform sind der harte Abschnitt und der weiche Abschnitt des Sperrelements fest, insbesondere stoffschlüssig, miteinander verbunden, sodass das Sperrelement einstückig ausgeführt ist. Dadurch wird zweckmäßigerweise die Vormontage der Schraubenmutter mit Sperrelementen erleichtert.

Nachfolgend wird ein Ausführungsbeispiel der Erfindung anhand einer Zeichnung näher erläutert. Darin zeigen:
- FIG 1: in teilweise geschnittener Seitenansicht eine Vorrichtung zur Schraubensicherung mit einer Schraubenmutter und einem Sperrelement in einem Vormontagezustand,
- FIG 2: in Darstellung gemäß FIG 1 die Vorrichtung in einem Montagezustand, in dem ein Bauteil mit der Schraubenmutter und einer Schraube verspannt ist.

Einander entsprechende Teile und Größen sind in beiden Figuren stets mit den gleichen Bezugszeichen versehen.

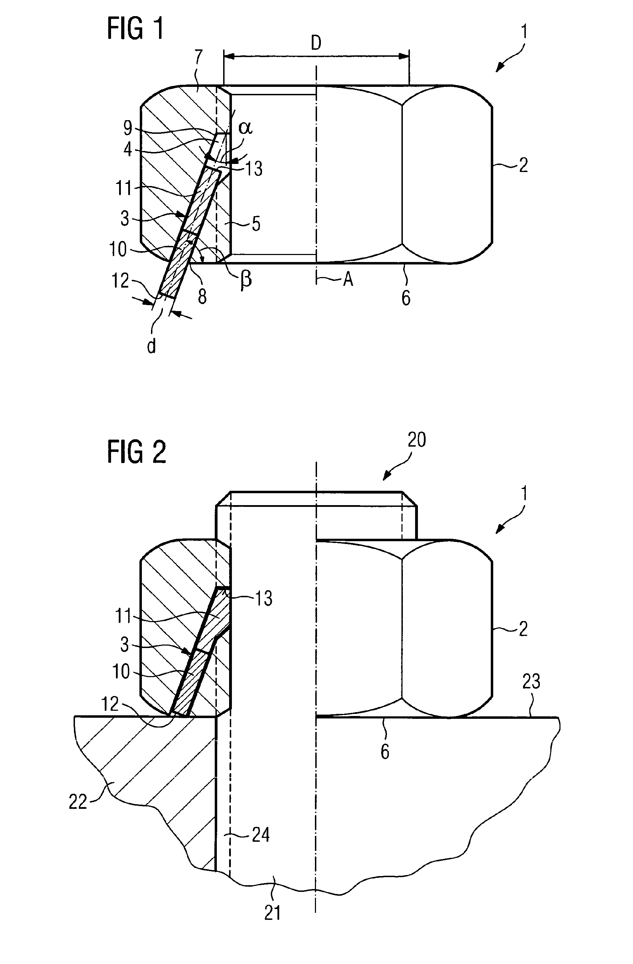

FIG 1 zeigt in Seitenansicht eine Vorrichtung 1 zur Schraubensicherung. Die Vorrichtung 1 umfasst eine Schraubenmutter 2, deren in der Darstellung linke Hälfte geschnitten abgebildet ist sowie ein Sperrelement in Form eines Sperrstifts 3.

Die Schraubenmutter 2 umfasst einen durchgängigen schrägen Kanal in Form einer Bohrung 4 mit einem Durchmesser d, einen inneren Gewindegang 5 mit einem Durchmesser D und eine Unterseite 6. In der Darstellung gemäß FIG 1 ist ferner eine radial-axial aufgespannte Teilquerschnittsfläche 7 der Schraubenmutter 2 dargestellt.

Die durchgängige, schräge Bohrung 4 mündet mit einem ersten Ende 8 an der Unterseite 6 und mit einem zweiten Ende 9 an dem Gewindegang 5. Dabei ist die Bohrung 4 so positioniert, dass sich das erste Ende 8 an der Unterseite 6 in etwa radial mittig am unteren Rand der Teilquerschnittsfläche 7 befindet und das zweite Ende 9 in etwa auf halber axialer Höhe des Gewindegangs 5. Gegenüber einer Achse A des Gewindegangs 5 ist die Bohrung 4 in einem Winkel α von 20° geneigt, wodurch sich gegenüber der Unterseite 6 eine Neigung in einem Winkel β von 70° ergibt. Aus der Darstellung wird ferner deutlich, dass der Durchmesser d der Bohrung 4 klein im Verhältnis zum Durchmesser D des Gewindegangs 5 ist.

Der zylinderförmige Sperrstift 3 umfasst harten Abschnitt 10 aus Edelstahl und einen weichen Abschnitt 11 aus Kupfer.

Der Sperrstift 3 ist derart passgenau in die Bohrung 4 eingebracht, dass er mit einem ersten Freiende 12 an der Unterseite 6 der Schraubenmutter 2 aus der Bohrung 4 herausragt, wohingegen er mit einem zweiten Freiende 13 in etwa mit dem Gewindegang 5 bündig ist, somit also vollständig in der Bohrung 4 aufgenommen ist. Der Sperrstift 3 ist in der Bohrung 4 durch Reibschluss verliersicher gehalten. Dieser Reibschluss ist aber durch Druckausübung auf das hervorstehende Freiende 12 überwindbar, so dass der Sperrstift 3 in der Bohrung 4 verschoben werden kann.

In FIG 2 ist in teilweise geschnittener Seitenansicht eine Schraubenverbindung 20 dargestellt, die mit der erfindungsgemäßen Vorrichtung 1 gesichert ist.

Die Schraubenverbindung 20 umfasst die mit dem Sperrstift 3 versehene Schraubenmutter 2 sowie eine nur teilweise dargestellte Schraube 21 und ein nur ausschnittsweise dargestelltes Bauteil 22, das durch die Schraubenmutter 2 und die Schraube 21 verspannt wird.

Hierzu ist das Bauteil 22 mit einer Bohrung versehen, in die die Schraube 21 eingebracht ist. Die Schraubenmutter 2 ist nun derart auf die Schraube 21 montiert, dass sie mit ihrer Unterseite 6 in Richtung einer angrenzenden Oberfläche 23 des Bauteils 22 zeigt.

In FIG 2 wird deutlich, wie der Sperrstift 3 beim Anziehen der Schraubenverbindung 20 in der Bohrung 4 der Schraubenmutter 2 verschoben wird: Das Freiende 12 des harten Abschnitts 10 ragt nun nicht mehr an der Unterseite 6 der Schraubenmutter 2 heraus, sondern presst auf die Oberfläche 23 des Bauteils 22, wodurch die Schraubenmutter 2 gegenüber dem Bauteil 22 gegen Verdrehen gesichert wird. Das Freiende 13 des weichen Abschnitts 11 wird in den Gewindegang 5 gedrückt bzw. in ein Außengewinde 24 der Schraube 21 gequetscht, wodurch die Schraubenmutter 2 gegenüber der Schraube 21 gegen Verdrehen gesichert wird.

## Patentansprüche

1. Vorrichtung (1) zur Sicherung einer Schraubenverbindung (20) mit einer Schraubenmutter (2) und einem Sperrelement (3),
bei der die Schraubenmutter (2) mit einem durchgängigen Kanal (4) versehen ist,
wobei ein erstes Ende (8) des Kanals (4) an einer Unterseite (6) der Schraubenmutter (2) mündet, die in einer Montagestellung einer Oberfläche (23) eines zu verschraubenden Teils (22) zugewandt ist,
wohingegen ein zweites Ende (9) des Kanals (4) an einem inneren Gewindegang (5) der Schraubenmutter (2) mündet,
wobei das Sperrelement (3) zumindest zwei Abschnitte (10, 11) aufweist, von denen der Abschnitt (10) härter ist als der Abschnitt (11),
wobei das Sperrelement (3) in einem Vormontagezustand derart in dem Kanal (4) der Schraubenmutter (2) einliegt, dass es mit einem Freiende (12) des harten Abschnitts (10) an der Unterseite (6) der Schraubenmutter (2) aus dem Kanal (4) herausragt, während der weiche Abschnitt (11) vollständig in dem Kanal (4) aufgenommen ist, und
wobei das Sperrelement (3) in dem Kanal (4) derart verschiebbar ist, dass ein Freiende (13) des weichen Abschnitts (11) in den Gewindegang (5) hineinragt, wenn das Freiende (12) des harten Abschnitts (10) bündig mit der Unterseite (6) ist.

2. Vorrichtung (1) nach Anspruch 1,
**dadurch gekennzeichnet,**
**dass** das Sperrelement (3) stiftförmig mit einer an den Kanalquerschnitt angepassten Querschnittsform ausgebildet ist.

3. Vorrichtung (1) nach Anspruch 1 oder 2,
**dadurch gekennzeichnet,**
**dass** der Kanal (4) einen runden Kanalquerschnitt aufweist.

4. Vorrichtung (1) nach einem der Ansprüche 1 bis 3,
**dadurch gekennzeichnet,**
**dass** die Schraubenmutter (2) mit drei gleichartigen Kanälen (4) versehen ist, die gleichmäßig über den Umfang der Schraubenmutter (2) verteilt sind,
wobei in jedem der Kanäle (4) ein Sperrelement (3) einliegt.

5. Vorrichtung (1) nach einem der Ansprüche 1 bis 4,
**dadurch gekennzeichnet,**
**dass** der Kanal (4) einen im Vergleich zum Durchmesser (D) des Gewindeganges (5) kleinen Durchmesser (d) aufweist.

6. Vorrichtung (1) nach einem der Ansprüche 1 bis 5,
**dadurch gekennzeichnet,**
**dass** das erste Ende (8) des Kanals (4) in radialer Richtung etwa mittig zwischen dem Radius des Gewindeganges und dem mittleren Außenradius der Schraubenmutter (2) liegt.

7. Vorrichtung (1) nach einem der Ansprüche 1 bis 6,
**dadurch gekennzeichnet,**
**dass** sich das zweite Ende (9) des Kanals (4) etwa auf halber axialer Höhe des Gewindeganges (5) befindet.

8. Vorrichtung (1) nach einem der Ansprüche 1 bis 7,
**dadurch gekennzeichnet,**
**dass** der Kanal (4) zu einer Achse (A) des Gewindegangs (5) einen Winkel (α) von etwa 20° einschließt.

9. Vorrichtung (1) nach einem der Ansprüche 1 bis 8,
**dadurch gekennzeichnet,**
**dass** der harte Abschnitt (10) des Sperrelements (3) aus Edelstahl besteht.

10. Vorrichtung (1) nach einem der Ansprüche 1 bis 9,
**dadurch gekennzeichnet,**
**dass** der weiche Abschnitt (11) des Sperrelements (3) aus Kupfer oder Kunststoff besteht.

11. Vorrichtung (1) nach einem der Ansprüche 1 bis 10,
**dadurch gekennzeichnet,**
**dass** der harte Abschnitt (10) und der weiche Abschnitt (11) des Sperrelements (3) innerhalb des Kanals (4) fest, insbesondere stoffschlüssig, miteinander verbunden sind.
